# EUROPÄISCHE PATENTANMELDUNG

(11) **EP 1 889 646 A1**
(43) Veröffentlichungstag der Anmeldung: **20.02.2008**
(21) Anmeldenummer: 07008907.3
(22) Anmeldetag: 02.05.2007
(51) Int. Cl.: B01D 35/30

(54) **Filtervorrichtung, sowie Deckel für einen Regenwasserfilter**

(30) Priorität: 07.08.2006 DE 202006012057 U
(71) Anmelder: Graf Plastics GmbH, 79331 Teningen (DE)
(72) Erfinder: Graf, Otto P., 79331 Teningen (DE)
(74) Vertreter: Grünecker, Kinkeldey, Stockmair & Schwanhäusser Anwaltssozietät

(57) **Zusammenfassung**

Bei einer Regenwasser-Filtervorrichtung (F) zur wahlweisen Installation in einem Tankdorn, einem Schacht oder einem Tank weist ein zumindest einen Filtereinsatz (5) enthaltendes Filtergehäuse (1) mit einem entnehmbaren Deckel (D) auf, der zumindest bereichsweise durchsichtig ist.

## Beschreibung

Die Erfindung betrifft eine Filtervorrichtung gemäß Oberbegriff des Patentanspruchs 1 sowie einen Deckel für einen Regenwasserfilter gemäß Oberbegriff des Patentanspruchs 17.

Filtervorrichtungen für technische Einsatzzwecke weisen im Regelfall in einem Filtergehäuse einen Filtereinsatz auf. Zum Installieren bzw. zur Wartung oder Inspektion ist im Filtergehäuse eine Inspektions- oder Einsetzöffnung ausgespart, die durch einen zu öffnenden oder wegnehmbaren Deckel verschlossen ist. Um den Verschmutzungsgrad des Filtereinsatzes zu überprüfen oder das Arbeitsverhalten der Filtervorrichtung zu inspizieren, muss der Deckel abgenommen werden, was zeitaufwändig und gegebenenfalls, beispielsweise abhängig von der Einbausituation der Filtervorrichtung, mühsam ist.

In der Abwassertechnik und im besonderen bei der systematischen Regenwasser-Nutzung werden Filtervorrichtungen verwendet, wie sie beispielsweise aus dem Katalog R 26, Ausgabe 2006, "Regenwasser-Nutzung mit System", Seite 24, "Optimax-Filter" Seite 25, "Minimax-Filter", oder dem Katalog "so einfach ist Regenwasser-Nutzung", 2006, Seite 14, jeweils der Firma Otto Graf GmbH Kunststofferzeugnisse, Carl-Zeiss-Str. 2, 679331 Teningen, bekannt sind, um beispielsweise Regenwasser zu filtrieren, das dann weiterer Nutzung zugeführt wird, z.B. für WC-Spülun-gen, zum Pflanzengießen, oder dgl. Diese Filtervorrichtungen werden üblicherweise im Tankdom eines Regenwassertanks oder einem anderen Behälter, z. B. 80 cm - 100 cm tief, installiert, derart, dass sie nach Wegnahme des Deckels des Tankdoms von oben zugänglich sind.

Da viele Faktoren dafür verantwortlich sind, wie effizient die Filtervorrichtung arbeitet, beispielsweise wie hoch der momentane Schmutzgehalt des Regenwassers, der Anteil von Blättern, Ästen und Zweigen, Hagelkörner, Dachschindelmaterial, und dgl. ist, muss der Verschmutzungsgrad der Filtersektion von Zeit zu Zeit überprüft werden, und um gegebenenfalls einen Reinigungszyklus durchzuführen, oder auch nur zu inspizieren, wie gut die Wasserausbeute im Betrieb der Filtervorrichtung noch ist. Da bei den bekannten Filtervorrichtungen die Deckel aus demselben Kunststoffmaterial ausgebildet sind wie das Filtergehäuse, muss dafür der Deckel geöffnet oder abgenommen werden. Dies kann speziell bei relativ tiefer Installation im Tankdom für Nichtfachleute mühsam und gegebenenfalls gefährlich sein. Daraus kann resultieren, dass es eher aus Bequemlichkeit oder Angst unterlassen wird, die Filtervorrichtung öfter zu überprüfen, so dass gar nicht bekannt ist, dass die Filterwirkung gegebenenfalls schon bis auf ein nicht mehr zweckmäßiges Maß abgefallen ist. Anfallendes Regenwasser wird dann zur Nutzung nicht mehr effizient gefiltert.

Der Erfindung liegt die Aufgabe zugrunde, eine benutzerfreundliche Filtervorrichtung der eingangs genannten Art anzugeben.

Die gestellte Aufgabe wird mit den Merkmalen des Patentanspruchs 1 gelöst.

Da der Deckel zumindest einen durchsichtigen Bereich hat, braucht der Deckel zum Überprüfen des Verschmutzungsgrades sogar oder zum Inspizieren der Wasserausbeute im Betrieb nicht mehr geöffnet oder abgenommen zu werden, sondern diese visuellen Kontrollen können bequem durch den geschlossenen Deckel auch von Nichtfachleuten durchgeführt werden. Selbst bei tiefer Einbaulage im Tankdom eines Regenwassertanks genügt es, nur den Deckel des Tankdoms zu entfernen, und dann, gegebenenfalls mit einer Taschenlampe ausgerüstet, entweder den Verschmutzungsgrad oder die Wasserausbeute zu überprüfen, ohne den Deckel zu hantieren. Auf diese Weise ist die Wahrscheinlichkeit höher, dass stets früh genug festgestellt wird, ob die Filtervorrichtung gewartet gehört. Nichtfachleute oder Heimwerker können unter Nutzen des durchsichtigen Bereichs des Deckels nicht nur die Funktionsfähigkeit der Filtervorrichtung bequem mit einem Blick überprüfen, sondern auch frühzeitig Wartungsmaßnahmen veranlassen oder durchführen. Dadurch ist benutzerfreundlich stets gute Effizienz bei der Regenwasser-Nutzung gesichert. Die Kontrolle der Wasserausbeute im Betrieb der Filtervorrichtung ist dank des durchsichtigen Bereichs des Deckels besonders bequem durchzuführen, weil dabei kein ggfs. verschmutztes Wasser aus der Filtervorrichtung herausspritzt. Die Filtervorrichtung ist dank des durchsichtigen Bereichs des Deckels wesentlich benutzerfreundlicher als bekannte. Das Prinzip ist nicht nur für Regenwasserfilter-Vorrichtungen zweckmäßig, sondern kann auch bei anderen Filtervorrichtungen eingesetzt werden.

Zweckmäßig sind das Filtergehäuse und der zumindest bereichsweise durchsichtige Deckel aus Kunststoff hergestellt, vorzugsweise jeweils einstückige Kunststoff-Spritzgussteile oder Rotations-Sinterteile. Speziell für den Deckel, zumindest dessen durchsichtigen Bereich, ist Polypropylen ein kostengünstiger Kunststoffwerkstoff, der sich durch Abwasserbeständigkeit und dauerhafte, gute Transparenz auszeichnet. Auch PS (Polystyrol) oder Acryl bzw. Plexiglas oder sogar Glas sind durchaus brauchbare Materialien.

Bei einer zweckmäßigen Ausführungsform ist der Filtereinsatz eine Filterpatrone oder ein Filtersieb mit zumindest einer Filtriersektion, die bei visueller Inspektion relativ deutlich erkennen lässt, wie es um die Effizienz des Filters steht. Erfindungsgemäß ist der Deckel oder der durchsichtige Bereich so in Relation zum installierten Filtereinsatz platziert, dass zumindest ein Abschnitt der Filtriersektion und/oder ein Überlaufbereich bei der Kontrolle der Ausbeute im Betrieb durch den durchsichtigen Bereich des Deckels visuell inspizierbar ist bzw. sind, ohne den Deckel öffnen oder abnehmen zu müssen.

Besonders zweckmäßig ist es, den Deckel zur Gänze durchsichtig auszubilden. So lassen sich auch alle Bereiche im Inneren des Filtergehäuses inspizieren, die in Blickrichtung von außen in die Öffnung des Filtergehäuses zu sehen sind.

Bei einer anderen Ausführungsform kann der Deckel bis auf einen Randbereich durchsichtig sein. Der Randbereich lässt sich zum Festlegen des Deckels entsprechend gestalten.

Bei einer zweckmäßigen Ausführungsform hat der Deckel zumindest ein durchsichtiges Fenster. Es könnten auch mehrere Fenster vorgesehen sein, falls bei einer größeren Filtervorrichtung unterschiedliche Bereiche im Inneren des Filtergehäuses inspiziert werden sollen.

Zweckmäßig ist der Deckel im durchsichtigen Bereich sogar poliert, zweckmäßigerweise hochglanzpoliert, damit ein guter Durchblick sichergestellt wird.

Außerhalb des durchsichtigen Bereiches kann bei einer zweckmäßigen Ausführungsform der Deckel milchig oder rau oder strukturiert sein, bzw. aus nicht durchsichtigem Kunststoffmaterial bestehen.

Um zu verhindern, dass der durchsichtige Bereich des Deckels im Betrieb der Filtervorrichtung verschmutzt, kann innen und/oder außen eine wasserabweisende Ausrüstung vorgesehen werden, beispielsweise eine Beschichtung, wie sie auch für Duschwände oder Duschkabinentüren üblich ist.

Günstig ist im Filtergehäuse und/oder im oder am Deckel wenigstens ein Leuchtkörper bzw. eine Lichtquelle vorgesehen, die sich bei Bedarf, z.B. bei einer Inspektion durch den Deckel aktivieren lässt. Hierbei bietet sich speziell die LED-Technologie an.

Bei einer weiteren, zweckmäßigen Ausführungsform führt der Deckel eine weitere Funktion aus. Der geschlossene und gesicherte Deckel sichert nämlich Festlegungshandhaben des Filtereinsatzes im Filterbehälter, in dem er auf diese drückt, oder weist selbst Festlegungshandhaben auf, die auf dem Filtereinsatz aufstehen. Diese Festlegungshandhaben können ebenfalls durchsichtig sein, müssen aber nicht.

Um Nichtfachleuten oder Heimwerkern die Inspektion durch den geschlossenen Deckel zu erleichtern, kann es zweckmäßig sein, im oder beim durchsichtigen Bereich des Deckels wenigstens einen sichtbaren Inspektionshinweis aufzukleben oder einzuformen. Dies kann beispielsweise ein Pfeil oder eine Beschriftung sein, der bzw. die auf eine besonders aussagefähige Stelle der Filtriersektion hinweist.

Am Deckel und/oder am Filtergehäuse ist zweckmäßig zumindest ein Deckelverschluss vorgesehen, mit dem der Deckel festgelegt wird.

Bei einer besonders zweckmäßigen Ausführungsform ist im Filtergehäuse ein Reinigungsanschluss mit wenigstens einer Düse installiert, um bei einem Reinigungszyklus den Filtereinsatz und das Filtergehäuse mit einem oder mehreren kräftigen Wasserstrahlen zu reinigen. Erfindungsgemäß ist zumindest eine Düse des Reinigungsanschlusses auf die Innenseite des durchsichtigen Bereiches des Deckels gerichtet, um den durchsichtigen Bereich von Verunreinigungen zu befreien, falls sich welche abgesetzt haben sollten. Auch bei einem solchen Reinigungszyklus des Deckels braucht nicht ins Innere des Filtergehäuses eingegriffen zu werden, sondern kann von außen bequem manipuliert werden.

Bei einer weiteren, zweckmäßigen Ausführungsform ist der Deckel oder zumindest der durchsichtige Bereich des Deckels in Einbaulage der Filtervorrichtung nach oben schräg geneigt. Dies vermeidet Spiegelungen beim Inspizieren durch den durchsichtigen Bereich, falls die Filtervorrichtung in einem Tankdom eingebaut ist. Ferner läuft dank der Neigung Wasser leichter von dem durchsichtigen Bereich ab, so dass dieser länger klar bleibt.

Nach einem eigenständigen erfindungsgemäßen Gedanken ist der Deckel mit zumindest einem durchsichtigen Bereich ein kostengünstiger Nachrüstteil für bereits im Betrieb befindliche Filtervorrichtungen, um deren Inspektion benutzerfreundlicher zu gestalten.

Anhand der Zeichnung werden Ausführungsformen des Erfindungsgegenstandes erläutert. Es zeigen:
- Fig. 1: eine Perspektivansicht einer Filtervorrichtung mit festgelegtem Deckel,
- Fig. 2: eine perspektivische Darstellung der Filtervorrichtung von Fig. 1, wobei der Deckel abgenommen ist, und
- Fig. 3: eine weitere Ausführungsform.

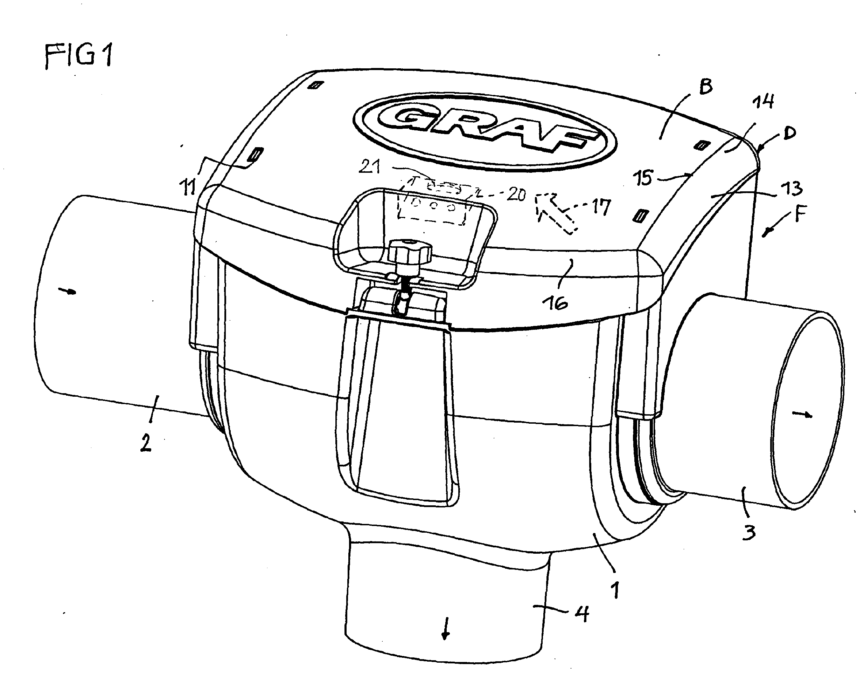

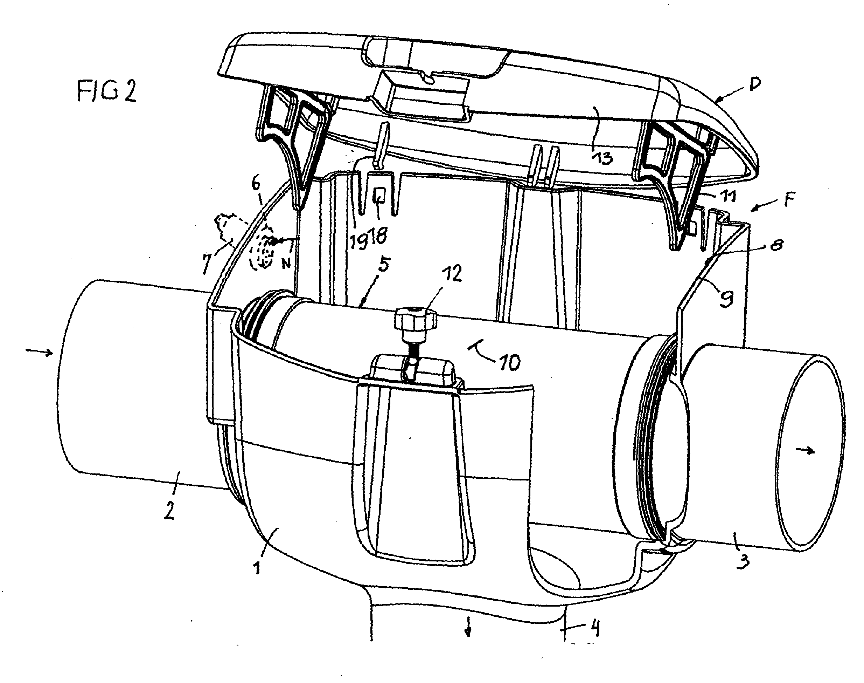

Eine in Fig. 1 und 2 gezeigte Filtervorrichtung F dient als Wasserfilter beispielsweise zum Einbau in den Tankdom (nicht gezeigt) eines Regenwassertanks für die Regenwasser-Nutzung, obwohl das erfindungsgemäß Prinzip auch für andere Filtervorrichtungen zweckmäßig ist.

Die Filtervorrichtung F weist ein beispielsweise aus Kunststoff (Spritzgussteil) bestehendes Filtergehäuse 1 in Kastenform auf, das in den Seitenwänden Zulauf- und Ablaufstutzen 2, 3 besitzt, sowie bodenseitig einen weiteren Ablaufstutzen 4. Im Filtergehäuse 1 ist zumindest ein Filtereinsatz 5 positioniert, beispielsweise eine Filterpatrone oder ein Sieb, der eine Filtriersektion 10 besitzt. In der gezeigten Ausführungsform handelt es sich um eine rohrförmige Filterpatrone 5, deren Einlauf auf den Zulaufstutzen 2 und deren Auslauf auf den Ablassstutzen 3 ausgerichtet ist, während die Filtriersektion 10 oberhalb des unteren Ablaufstutzens 4 liegt.

Durch den Zulaufstutzen 2 wird beispielsweise Regenwasser aus Regenrohren zugeleitet, das mit Verschmutzungen versetzt ist. Diese Verschmutzungen werden zum großen Teil in der Filtriersektion 10 zurückgehalten und in den Ablaufstutzen 3 ausgeschwemmt, während gereinigtes Wasser durch die Filtriersektion 10 austritt und nach unten durch den Ablaufstutzen 4 abläuft, beispielsweise in den Regenwassertank.

Bei der gezeigten Ausführungsform weist das Filtergehäuse 1 einen Dom 6 auf, in welchem ein Reinigungsanschluss 7 installiert ist, der beispielsweise bei Bedarf oder permanent an einen Wasserschlauch angeschlossen wird, und gegebenenfalls ein Ventil enthält. Im Inneren des Filtergehäuses 1 weist der Reinigungsanschluss mehrere Düsen auf, mit denen die Filtriersektion 10 mit hohem Druck zu säubern ist, und mindestens eine Düse N, die gegen die Unterseite eines auf dem Filtergehäuse 1 anbringbaren Deckels D gerichtet ist, um dessen Unterseite reinigen zu können.

Das Filtergehäuse 1 weist zum Einsetzen und Entnehmen des Filtereinsatzes 5 eine Inspektions- und Einsetzöffnung 8 auf, die von einem Aufsetzrand 9 umgegeben ist.

Gegebenenfalls sind Festlegungshandhaben 11 für den Filtereinsatz 5 vorgesehen (hier am Deckel), die bei aufgesetztem und festgelegtem Deckel D ein Verrutschen oder Hochsteigen des Filtereinsatzes 5 verhindern.

Der Deckel D ist in der gezeigten Ausführungsform ein Stülpdeckel mit zumindest einem Deckelverschluss 12 und einem umlaufenden Stülprand 13. Hinterseitige Haken 19 des Deckels D werden in Ausschnitte 18 des Filtergehäuses umgelängt.. Der Deckel ist beispielsweise ein Kunststoffformteil, zweckmäßigerweise ein einstückiger Spritzgussteil, oder ein Rotationsgussteil. Der Deckel D weist erfindungsgemäß zumindest einen durchsichtigen Bereich B, beispielsweise in Form eines Fensters 15 auf, der aus Glas oder aus Kunststoff besteht. Zweckmäßig besteht der Deckel D einschließlich des durchsichtigen Bereiches B aus Polypropylen oder einem ähnlichen Kunststoffmaterial. Der Deckel D könnte zur Gänze durchsichtig sein, oder, wie gezeigt, einen nicht-durchsichtigen Randbereich 14 besitzen. Alternativ könnte der insgesamt aus durchsichtigem Kunststoff hergestellte Deckel D im Randbereich milchig oder aufgeraut oder strukturiert sein (bei 16). Ferner könnte der Deckel D mehrere durchsichtige Bereiche aufweisen.

Zweckmäßig kann beim oder im durchsichtigen Bereich B ein Inspektionshinweis 17, z.B. in Form einer Beschriftung oder eines Pfeiles, vorgesehen (aufgeklebt oder eingeformt sein), um einen Benutzer anzuweisen, auf welchen Bereich der unter dem durchsichtigen Bereich B sichtbaren Filtriersektion 10 besonderes Augenmerk gerichtet werden muss, um den Verschmutzungsgrad beurteilen, bzw. die Wasserausbeute im Betrieb abschätzen zu können.

Zweckmäßig ist der durchsichtige Bereich B poliert, vorzugsweise sogar hochglanzpoliert, um gute Einsicht zu bieten. Es ist ferner möglich, den durchsichtigen Bereich außen und/oder innen mit einer wasser- und/oder schmutzabweisenden Ausrüstung zu versehen, z.B. mit einer Beschichtung, um eine frühzeitige Verschmutzung des durchsichtigen Bereiches B zu vermeiden. Ferner kann mittels der Düse 8, ohne den Deckel abnehmen oder öffnen zu müssen, die Unterseite des durchsichtigen Bereiches B mit einem oder mehreren Wasserstrahlen effizient gereinigt werden. Im Filtergehäuse 1 und/oder im oder am Deckel D kann zumindest ein Leuchtkörper 20 vorgesehen sein (Fig. 1), der sich z.B. mittels eines Schalters 21 aktivieren lässt, beispielsweise für eine Inspektion unter Nutzen des durchsichtigen Bereichs B des Deckels D. Eine Möglichkeit ist es, zumindest eine LED und ggfs. eine Batterie oder eine exponiert platzierte Solarzelle einzugliedern. Die Beleuchtung kann auch bei Arbeiten im Filtergehäuse 1 bei abgenommenem oder geöffnetem Deckel D genützt werden, ist jedoch besonders zweckmäßig in Verbindung mit dem durchsichtigen Deckel D und für den Fall einer dunklen und abgeschatteten Umgebung.

In der Einbaulage der Filtervorrichtung F im Tankdom eines Regenwasserbehälters oder einen Schacht oder Tank kann der Deckel D oder zumindest dessen durchsichtiger Bereich B nach oben schräg geneigt platziert sein, damit Wasser gut abläuft, und beim Inspizieren von oben störende Spiegelungen vermieden werden. Gegebenenfalls ist der durchsichtige Bereich B sogar entspiegelt.

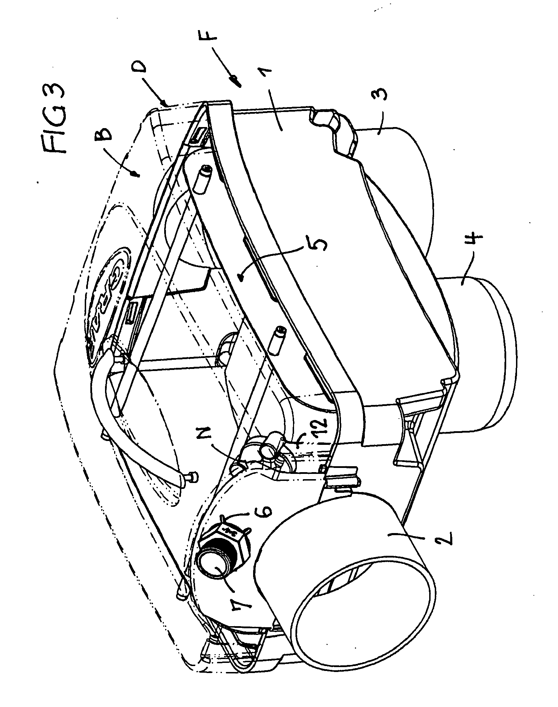

In der Ausführungsform von Fig. 3 ist der Deckel zur Gänze durchsichtig. Der Filtereinsatz 5 enthält ein Sieb, über das zulaufendes Regenwasser auf den Zulaufstutzen 2 zum Ablaufstutzen 3 läuft, während gereinigtes Wasser durch den anderen Ablaufstutzen 4 abgezweigt wird. Der Deckel D und der Filtereinsatz 5 besitzen Handgriffe zur leichteren Handhabung. Der Verschmutzungsgrad des Siebs und die Ausbeute sind durch den festgelegten Deckel D zu inspizieren. Der Reinigungsanschluss 7 ist fest installiert. Der Deckelverschluss 12 umfasst Rasthaken.

## Patentansprüche

1. Filtervorrichtung (F), insbesondere Regenwasser-Filter, zur Installation in einem Tankdom, Schacht oder Tank mit einem zumindest einen Filtereinsatz (5) enthaltenden Filtergehäuse (1) mit Zu- und Ablaufstutzen (2, 3) und einem Deckel (D), der eine Inspektions- und Einsetzöffnung (8) des Filtergehäuses (1) verschließt und zu öffnen oder zu entnehmen ist, **dadurch gekennzeichnet, dass** der Deckel (D) zumindest bereichsweise durchsichtig ist.

2. Filtervorrichtung nach Anspruch 1, **dadurch gekennzeichnet, dass** das Filtergehäuse (1) und der zumindest bereichsweise durchsichtige Deckel (D) aus Kunststoff bestehen, vorzugsweise jeweils einstückige Kunststoff-Spritzgussteile sind.

3. Filtervorrichtung nach Anspruch 1, **dadurch gekennzeichnet, dass** der Deckel (D), zumindest in wenigstens einem durchsichtigen Bereich (B), aus Polypropylen oder einem ähnlichen Kunststoffmaterial oder aus Glas oder Plexiglas besteht.

4. Filtervorrichtung nach Anspruch 1, **dadurch gekennzeichnet, dass** der Filtereinsatz (5) eine Filterpatrone oder ein Filtersieb mit zumindest einer Filtriersektion (10) ist, und dass der Deckel (D) so in Relation zum installierten Filtereinsatz platziert ist, dass zumindest ein Abschnitt der Filtersektion (10) durch den durchsichtigen Bereich (B) des Deckels (D) ohne den Deckel (D) zu öffnen oder abzunehmen, visuell inspizierbar ist.

5. Filtervorrichtung nach Anspruch 1, **dadurch gekennzeichnet, dass** der Deckel (D) zur Gänze durchsichtig ist.

6. Filtervorrichtung nach Anspruch 1, **dadurch gekennzeichnet, dass** der Deckel (D) bis auf einen Randbereich (14) durchsichtig ist.

7. Filtervorrichtung nach Anspruch 1, **dadurch gekennzeichnet, dass** der Deckel (D) zumindest ein durchsichtiges Fenster (15) im durchsichtigen Bereich (B) aufweist.

8. Filtervorrichtung nach Anspruch 1, **dadurch gekennzeichnet, dass** der Deckel (D) bzw. der durchsichtige Bereich (B) des Deckels poliert ist, vorzugsweise hochglanzpoliert ist.

9. Filtervorrichtung nach Anspruch 1, **dadurch gekennzeichnet, dass** der Deckel (D) außerhalb des durchsichtigen Bereichs (B) milchig oder rau oder strukturiert ist oder aus nicht durchsichtigem Kunststoffmaterial besteht.

10. Filtervorrichtung nach Anspruch 1, **dadurch gekennzeichnet, dass** der durchsichtige Bereich (B) innen- und/oder außenseitig eine wasserabweisende Ausrüstung aufweist, vorzugsweise eine Beschichtung.

11. Filtervorrichtung nach Anspruch 1, **dadurch gekennzeichnet, dass** im oder am Filtergehäuse (1) und/oder im oder am Deckel (D) zumindest eine Beleuchtung (20), vorzugsweise ein Beleuchtungssystem nach einer LED-Technologie, vorgesehen ist.

12. Filtervorrichtung nach Anspruch 1, **dadurch gekennzeichnet, dass** der Deckel (D) unterseitige Festlegungshandhaben (11) für den Filtereinsatz (5) aufweist.

13. Filtervorrichtung nach Anspruch 1, **dadurch gekennzeichnet, dass** im oder beim durchsichtigen Bereich (B) des Deckels (D) wenigstens ein sichtbarer Inspektionshinweis (17) aufgeklebt oder eingeformt ist.

14. Filtervorrichtung nach Anspruch 1, **dadurch gekennzeichnet, dass** am Deckel (D) und/oder am Filtergehäuse (1) ein Deckelverschluss (12) vorgesehen ist.

15. Filtervorrichtung nach Anspruch 1, **dadurch gekennzeichnet, dass** im Filtergehäuse (1) ein Reinigungsanschluss (7) mit wenigstens einer Düse installiert ist, und dass zumindest eine Düse (8) auf die Innenseite des durchsichtigen Bereichs (B) des Deckels (D) gerichtet ist.

16. Filtervorrichtung nach Anspruch 1, **dadurch gekennzeichnet, dass** der Deckel (D) oder zumindest der durchsichtige Bereich (B) des Deckels (D) in Einbaulage der Filtervorrichtung (F) nach oben schräg geneigt ist.

17. Deckel für einen Regenwasser-Filter, wobei der Deckel in oder oberhalb einer Inspektions- oder Einsetzöffnung (8) eines Filtergehäuses (1) anbringbar ist, **dadurch gekennzeichnet, dass** der Deckel (D) zumindest bereichsweise durchsichtig ist.
